# EUROPEAN PATENT APPLICATION

(11) **EP 4 386 347 A1**
(43) Date of publication of application: **19.06.2024**
(21) Application number: 22889707.0
(22) Date of filing: 03.10.2022
(51) Int. Cl.: G01L 9/00

(54) **PRESSURE SENSOR, AND DISPENSING DEVICE**

(30) Priority: 05.11.2021 JP 2021181274
(71) Applicant: HITACHI HIGH-TECH CORPORATION, Tokyo 105-6409 (JP)
(72) Inventor: YAMASAKI, Tatsuya, Tokyo 100-8280 (JP); KANAMARU, Masatoshi, Tokyo 100-8280 (JP); AONO, Takanori, Tokyo 100-8280 (JP); SUZUKI, Yohichiroh, Tokyo 105-6409 (JP); TAKAHASHI, Takuya, Tokyo 105-6409 (JP); IKEDA, Hiroshi, Tokyo 100-8280 (JP)
(74) Representative: Manitz Finsterwald Patent- und Rechtsanwaltspartnerschaft mbB
(86) International application number: PCT/JP2022/036986
(87) International publication number: WO 2023/079883

(57) **Abstract**

The objective of the present invention is to provide a pressure sensor having an improved effect of suppressing peeling of a pressure accepting portion such as a diaphragm. A pressure sensor 15 according to the present invention comprises a sensor enclosure 32 in which a first flow passage 33 and a second flow passage 35 that branches from the first flow passage 33 are formed, a sensor chip 31 which includes a diaphragm portion 31a provided so as to block the second flow passage 35, and which is joined to the sensor enclosure 32, a cap member 34 installed on the sensor chip 31 so as to cover the diaphragm portion 31a from the opposite side to the sensor enclosure 32, and a pressing member 60 for pressing the cap member 34 toward the sensor chip 31, wherein an inner circumference of a part of the cap member 34 that is placed on the sensor chip 31 is disposed so as to be positioned further toward the center of the diaphragm portion 31a than an inner circumference of a joint portion 36 of the sensor enclosure 32 and the sensor chip 31.

## Description

### Technical Field

The present invention relates to a pressure sensor suitable for being mounted on a dispensing device or the like, and a dispensing device.

### Background Art

PTL 1 discloses a pressure sensor including a sensor chip which detects a pressure, a base plate which supports the sensor chip, and a support diaphragm which is bonded to the base plate and supports the base plate. The support diaphragm is joined to a package, and the sensor chip and the base plate are supported in the package through the support diaphragm alone (see Abstract).

The sensor chip of the pressure sensor in PTL 1 has a size which is not greater than one square centimeter seen from an upper surface, and has a spacer formed of a square thin plate, a sensor diaphragm which is bonded to the spacer and in which a strain is generated in accordance with application of a pressure, and a sensor pedestal which is bonded to the sensor diaphragm to form a vacuum capacitance chamber (a reference chamber) (see paragraph [0028]).

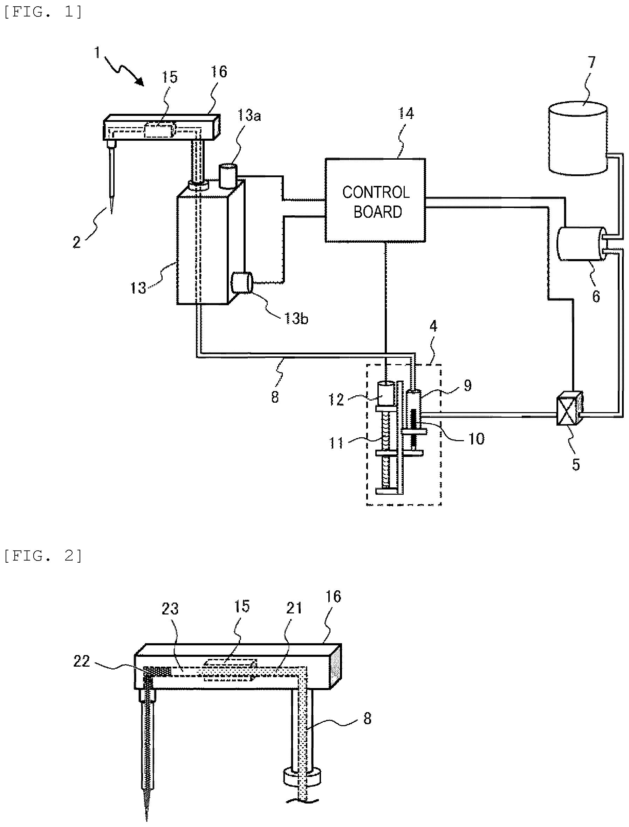

A contact pad is formed on an upper surface of the sensor chip, and a contact spring having sufficient flexibility is in contact with the contact pad to achieve electrical conduction. Thereby, the sensor chip is biased toward the base plate and the support diaphragm (see paragraph [0040] and FIG. 1).

### Citation List

### Patent Literature

PTL 1: JP2006-3234A

### Summary of Invention

### Technical Problem

The pressure sensor in PTL 1 has a structure in which the sensor diaphragm receives a pressure, and the sensor pedestal which receives a biasing force from the contact spring presses the sensor diaphragm from an upper side. Moreover, an inner circumferential edge of a joint surface of the sensor pedestal, the joint surface being joined to the sensor diaphragm, is provided on an outer side in a direction along the joint surface, compared to an inner circumferential edge of a joint surface of the sensor diaphragm, the joint surface being joined to the spacer. In this case, when the sensor diaphragm which is a pressure accepting portion receives a pressure from a lower side, a tensile stress in a direction to peel from the sensor pedestal is generated at the inner circumferential edge part of the joint surface of the sensor diaphragm, the joint surface being joined to the sensor pedestal. When this tensile stress exceeds a joint strength between the sensor diaphragm and the sensor pedestal, peeling may occur between the sensor diaphragm and the sensor pedestal. However, PTL 1 does not provide structural consideration to suppress such peeling. Hereinafter, description is made while the sensor diaphragm is simply referred to as a diaphragm.

An object of the present invention is to provide a pressure sensor having an improved effect of suppressing peeling of a pressure accepting portion such as a diaphragm.

### Solution to Problem

In order to solve the problem, one of a representative pressure sensor includes:
a sensor enclosure in which a first flow passage and a second flow passage that branches from the first flow passage are formed;
a sensor chip including a diaphragm portion provided in such a manner as to block the second flow passage, and configured to be joined to the sensor enclosure;
a cap member installed on the sensor chip in such a manner as to cover the diaphragm portion from an opposite side to the sensor enclosure; and
a pressing member configured to press the cap member toward the sensor chip, wherein
an inner circumference of a placing part of the sensor chip is disposed at a closer position to a center of the diaphragm portion than a position at which an inner circumference of a joint portion between the sensor enclosure and the sensor chip is disposed, the placing part being a part where the cap member is placed.

### Advantageous Effects of Invention

According to the invention, the pressure sensor having the improved effect of suppressing peeling of the pressure accepting portion such as the diaphragm can be provided.

Problems, structures, and effects other than the foregoing will become apparent from the following description of embodiments.

### Brief Description of Drawings

[FIG. 1] FIG. 1 is a diagram illustrating a basic configuration of a dispensing device including a pressure sensor according to a first embodiment (Embodiment 1) of the present invention.
[FIG. 2] FIG. 2 is a view illustrating a state inside a pipe 8 immediately after suction in a vicinity of the pressure sensor according to Embodiment 1.
[FIG. 3A] FIG. 3A is a view illustrating one example of a structure of the pressure sensor according to Embodiment 1, and is an exploded perspective view of the pressure sensor.
[FIG. 3B] FIG. 3B is a view illustrating one example of the structure of the pressure sensor according to Embodiment 1, and is a sectional view taken in a normal direction of a sensor chip and a direction of a flow passage.
[FIG. 4] FIG. 4 is an exploded perspective view of the pressure sensor in a vicinity of the sensor chip according to Embodiment 1.
[FIG. 5] FIG. 5 is a sectional view of a pressure sensor which is a comparative example of the invention.
[FIG. 6] FIG. 6 is a sectional view of the pressure sensor according to Embodiment 1.
[FIG. 7] FIG. 7 is an exploded perspective view of a pressure sensor in a vicinity of a sensor chip according to a modification of Embodiment 1.
[FIG. 8] FIG. 8 is a sectional view of a pressure sensor according to a second embodiment (Embodiment 2) of the invention.
[FIG. 9] FIG. 9 is a sectional view of a pressure sensor according to a third embodiment (Embodiment 3) of the invention.
[FIG. 10] FIG. 10 is a sectional view of a pressure sensor according to a fourth embodiment (Embodiment 4) of the invention.
[FIG. 11] FIG. 11 is a sectional view of a pressure sensor according to a fifth embodiment (Embodiment 5) of the invention.
[FIG. 12A] FIG. 12A is an explanatory view illustrating a method of assembling the pressure sensor according to the fifth embodiment (Embodiment 5) of the invention.
[FIG. 12B] FIG. 12B is an explanatory view illustrating the method of assembling the pressure sensor according to the fifth embodiment (Embodiment 5) of the invention.
[FIG. 12C] FIG. 12C is an explanatory view illustrating the method of assembling the pressure sensor according to the fifth embodiment (Embodiment 5) of the invention.
[FIG. 12D] FIG. 12D is an explanatory view illustrating the method of assembling the pressure sensor according to the fifth embodiment (Embodiment 5) of the invention.
[FIG. 12E] FIG. 12E is an explanatory view illustrating the method of assembling the pressure sensor according to the fifth embodiment (Embodiment 5) of the invention.
[FIG. 12F] FIG. 12F is an explanatory view illustrating the method of assembling the pressure sensor according to the fifth embodiment (Embodiment 5) of the invention.
[FIG. 12G] FIG. 12G is an explanatory view illustrating the method of assembling the pressure sensor according to the fifth embodiment (Embodiment 5) of the invention.

### Description of Embodiments

In order to improve pressure detection sensitivity of a pressure sensor which uses a thin film semiconductor strain sensor, it is effective to make a diaphragm portion 31a of a strain detection part (pressure accepting portion) thinner, and increase a strain of the diaphragm portion 31a with respect to a pressure. To achieve this, a structure in which the strain detection part itself directly contacts a measurement target fluid is desirable. However, this structure may lead to such a negative effect that an end portion of a joint surface between an enclosure which forms a flow passage and the strain detection part (diaphragm portion 31a) also directly contacts a fluid, and therefore a tensile stress in a direction to peel a joint surface end portion may be generated during pressure acceptance, and peeling may occur.

The peeling of the joint surface becomes a cause of sensor sensitivity decrease and liquid leakage. In order to solve the problem, pressing from outside so that a compressive stress is generated at the joint surface end portion also during the pressure acceptance is effective. Embodiments according to the present invention implement a pressure sensor having high sensitivity and in which a cap member 34 is joined to the diaphragm portion 31a to protect the diaphragm portion 31a. Moreover, a pressure sensor which reduces a possibility of sensor sensitivity decrease and liquid leakage, and is highly reliable can be provided.

### [Embodiment 1]

A first embodiment of the invention is described with reference to FIGS. 1 to 7. This embodiment describes an example in which a pressure sensor 15 according to the invention is applied to a dispensing device 1.

FIG. 1 is a diagram illustrating a basic configuration of the dispensing device 1 including the pressure sensor 15 according to the first embodiment (Embodiment 1) of the invention. FIG. 1 illustrates a basic configuration of the pressure sensor 15 according to the invention and the dispensing device 1 mounted therewith. In FIG. 1, arrangement of the pressure sensor 15 is illustrated schematically.

A flow passage system of the dispensing device 1 includes a nozzle 2, a syringe pump 4, an electromagnetic valve 5, a gear pump 6, and a system water tank 7, and the respective components are connected to each other through a pipe 8. Moreover, the syringe pump 4 includes a container 9, a plunger 10, a ball screw 11, and a drive motor 12. The drive motor 12 is controlled by a control board 14, similarly to motors 13a and 13b which drive a sample dispensing mechanism 13 and the like. The pressure sensor 15 is provided inside an arm 16.

The arm 16 is capable of rotary operation and up-and-down operation to transfer to a position for suction and discharge of liquid. The rotary operation of the arm 16 is performed by the motor 13a, and the up-and-down operation is performed by the motor 13b.

As described above, the dispensing device 1 of this embodiment includes the nozzle 2, the syringe pump 4, the electromagnetic valve 5, the gear pump 6, and the system water tank 7. Moreover, the dispensing device 1 includes the pressure sensor 15 described below at the pipe 8 which connects the nozzle 2, the syringe pump 4, the electromagnetic valve 5, the gear pump 6, and the system water tank 7.

FIG. 2 is a view illustrating a state inside the pipe 8 immediately after suction in a vicinity of the pressure sensor according to Embodiment 1. In FIG. 2, arrangement of the pressure sensor 15 is illustrated schematically.

Inside the pipe 8 is filled with system water 21 which is water for syringe pressure transmission. Liquid 22 can be sucked or discharged from the nozzle 2 by a pressure from the syringe pump 4 being transmitted. When the liquid 22 is sucked from the nozzle 2, the plunger 10 inside the syringe pump 4 is pulled in a state in which the electromagnetic valve 5 is closed. On the contrary, when the liquid is discharged from the nozzle 2, the plunger 10 inside the syringe pump 4 is pushed into the container 9 in the state in which the electromagnetic valve 5 is closed. In a case in which the liquid 22 such as a sample is sucked, the liquid 22 is sucked after the nozzle 2 sucks segmentation air 23 for segmentation so that the liquid 22 is not mixed with the system water 21 inside the pipe 8.

The nozzle 2 is cleaned after the discharge. During the cleaning of the nozzle 2, cleaning water is applied to an outer wall of the nozzle 2, and the system water 21 inside the flow passage is pushed out at the same time. When the system water 21 inside the nozzle 2 is pushed out during the cleaning, the electromagnetic valve 5 is made open to utilize a pressure of the gear pump 6. Therefore, the system water 21 is fed at a higher pressure than when being fed by the syringe pump 4.

The open-and-close operation of the electromagnetic valve 5 described above is controlled by the control board 14. The control board 14 also controls driving of the gear pump 6.

The dispensing device 1 is provided with the pressure sensor 15 at the pipe 8 so as to detect anomaly, such as nozzle clogging and empty suction, which may be caused during the dispensing operation. The pressure sensor 15 monitors a pressure of the system water 21, and detects change in a pressure which is caused when anomaly, such as clogging of the nozzle 2 and empty suction, occurs. In this embodiment, the pressure sensor 15 is preferably disposed near the nozzle 2 as much as possible so as to sensitively grasp the pressure change of the nozzle 2. For this sake, in this embodiment, the pressure sensor 15 is installed inside the arm 16. However, the installation position of the pressure sensor 15 is not limited to inside the arm 16, but may be installed at a side surface of the sample dispensing mechanism 13, for example.

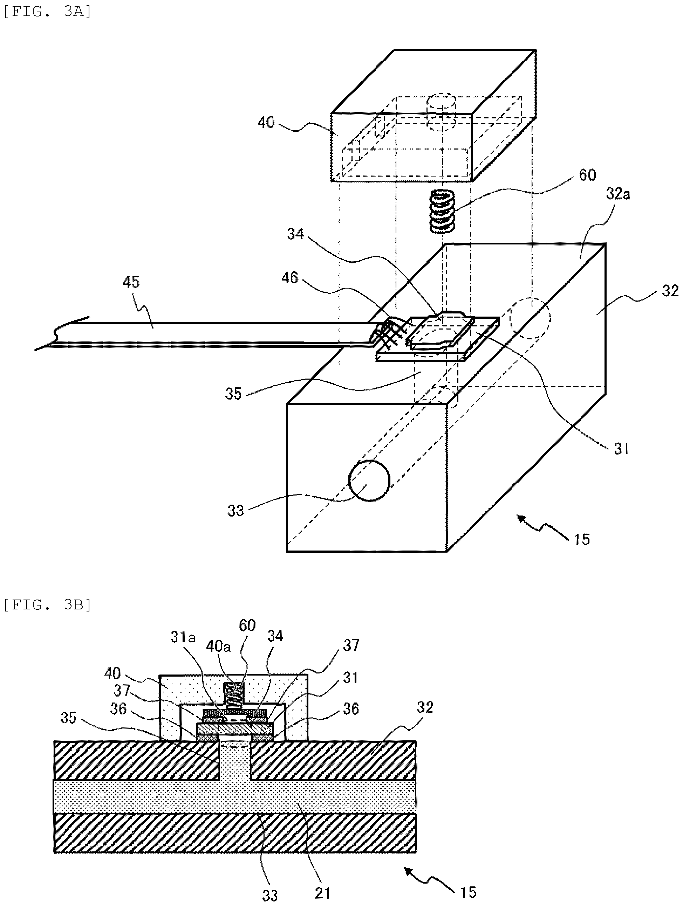

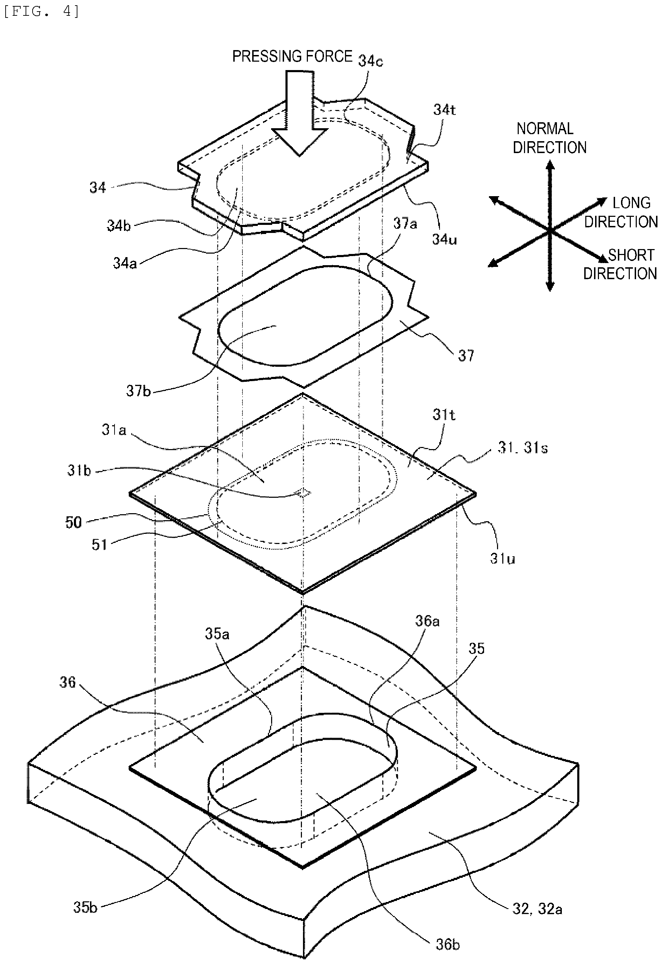

A structure of the pressure sensor according to this embodiment is described with reference to FIGS. 3A, 3B, and 4.

FIG. 3A is a view illustrating one example of the structure of the pressure sensor 15 according to Embodiment 1, and is an exploded perspective view of the pressure sensor 15. FIG. 3B is a view illustrating one example of the structure of the pressure sensor 15 according to Embodiment 1, and is a sectional view taken in a normal direction of a sensor chip 31 and a direction of a flow passage 33. Here, the sensor chip 31 has a thin plate-like shape, and has a flat plate surface (end surface) formed at a respective one of both ends in a thickness direction (an up-and-down direction in FIG. 3A). The normal direction of the sensor chip 31 is a direction perpendicular to the plate surface (end surface) of the thin plate-like shape formed by the sensor chip 31, and matches the thickness direction of the thin plate-like shape. The sensor chip 31 includes the diaphragm portion 31a, and a plate surface (end surface) which constitutes the diaphragm portion 31a serves as a pressure accepting surface. That is, the normal direction of the sensor chip 31 is a normal direction of the pressure accepting surface constituted by the diaphragm portion 31a.

A screw part (not illustrated) is provided to each of both ends of the flow passage 33 formed inside a sensor enclosure 32, so that the flow passage 33 is connectable to the pipe 8 of the dispensing device 1 with a coupler being interposed therebetween. Moreover, the flow passage 33 is provided with a branch flow passage 35 which is a flow passage which branches toward an outer surface of the sensor enclosure 32. The sensor chip 31 is disposed to block a terminal of the branch flow passage 35. That is, the diaphragm portion 31a of the sensor chip 31 is disposed in such a manner as to block the branch flow passage 35. The sensor chip 31 is joined to the sensor enclosure 32 by a sensor chip joining material 36.

In this embodiment, the branch flow passage 35 is provided perpendicularly to the flow passage (main flow passage) 33. A flat surface 32a is formed on an outer circumferential surface of the sensor enclosure 32, and the branch flow passage 35 is provided to open at the flat surface 32a. The sensor chip 31 is joined to the flat surface 32a, thus blocking the opening of the branch flow passage 35 on the flat surface 32a side. In a case in which the flow passage (main flow passage) 33 is a first flow passage, the branch flow passage 35 is a second flow passage which branches from the first flow passage 33.

A cap member 34 which protects the diaphragm portion 31a is joined to a surface (an upper surface in FIG. 3B) of the sensor chip 31. The cap member 34 is placed on the sensor chip 31 in such a manner as to cover the diaphragm portion 31a from an opposite side to the sensor enclosure 32. The cap member 34 is joined to the sensor chip 31 by a cap member joining material 37.

A compression coil spring 60 is disposed as a pressing means of the cap member 34, at an upper part of the cap member 34. A guide hole 40a is formed at the cap member 34. A part of the compression coil spring 60 is accommodated in the guide hole 40a, and extension and contraction of the compression coil spring 60 in the normal direction of the sensor chip 31 is guided by the guide hole 40a. A cover 40 is fixed to the sensor enclosure 32 in such a manner as to cover a periphery of the sensor chip 31 and the cap member 34. A method for fixing the cover 40 includes adhesion, screw fastening, snap fit, and the like.

The pressure sensor 15 of this embodiment includes the cover 40 which is fixed to the sensor enclosure 32 and covers the sensor chip 31, the cap member 34, and the compression coil spring (pressing member) 60. The pressure sensor 15 uses, as the pressing member, a single or multiple elastic bodies installed between the cover 40 and the cap member 34 in a state compressed compared to a natural length.

The compression coil spring 60 is provided as the pressing member which presses the cap member 34 toward the sensor chip 31. The compression coil spring 60 is in a compressed state while being sandwiched between the cover 40 and the cap member 34, and presses, by its restoring force, a center part of the cap member 34 to the sensor chip 31 side (downward in FIG. 3B). That is, an application point of a pressing force of the compression coil spring (pressing member) 60 is the center part of the cap member 34.

In the pressure sensor 15, change in a pressure of the system water 21 flowing in the flow passage 33 causes flexure deformation of the diaphragm portion 31a. The diaphragm portion 31a is a deformation part of the sensor chip 31. The pressure sensor 15 measures a pressure of the system water 21 flowing inside the sensor enclosure 32 by the sensor chip 31 measuring a strain due to the flexure deformation of the diaphragm portion 31a. A strain gauge part 31b which is mounted on a center part of a surface of the diaphragm portion 31a measures the strain. The diaphragm portion 31a is provided to a center part of the sensor chip 31, and the strain gauge part 31b is provided to the center part of the sensor chip 31.

In this embodiment, a thin film semiconductor having a quadrilateral thin plate-like shape constitutes the diaphragm portion 31a, and the strain gauge part 31b is provided to the diaphragm portion 31a. The sensor chip 31 includes a thin film semiconductor 31s which is a body part of the sensor chip 31, the diaphragm portion 31a included in the body part 31s, and the strain gauge part 31b which detects a strain of the diaphragm portion 31a.

A printed circuit board 45 is installed at the sensor enclosure 32 so as to extract output from the sensor chip 31, and the printed circuit board 45 is electrically connected to an electrode part on the sensor chip 31 by a bonding wire 46. As the printed circuit board 45, a glass epoxy board, a flexible printed circuit board, and the like may be considered.

FIG. 4 is an exploded perspective view of the pressure sensor 15 in a vicinity of the sensor chip 31 according to Embodiment 1.

The sensor chip 31 is joined to the sensor enclosure 32 by the sensor chip joining material 36 which is applied to the vicinity of the branch flow passage 35. FIG. 4 illustrates the sensor chip joining material 36 in a state (shape) after the sensor chip joining material (adhesive) applied to the vicinity of the branch flow passage 35 is hardened, and the sensor chip joining material 36 corresponds to a joint portion between the sensor enclosure 32 and the sensor chip 31. This joint portion 36 constitutes a first joint portion joining the sensor enclosure 32 and the sensor chip 31 by the joining material (adhesive).

The branch flow passage 35 forms an aperture plane 35b at the flat surface 32a of the sensor enclosure 32. An outer edge (aperture edge) 35a of the aperture plane 35b is formed at the flat surface 32a of the sensor enclosure 32. The sensor chip joining material 36 which is the joint portion between the sensor enclosure 32 and the sensor chip 31 has an aperture plane 36b at a part opposed to the aperture plane 35b, and an outer edge (aperture edge) 36a of the aperture plane 36b is formed. The aperture edge 36a of the sensor chip joining material 36 constitutes an inner circumference (inner circumferential edge) of the sensor chip joining material 36.

Note that in this embodiment the aperture plane 35b of the branch flow passage 35 and the aperture plane 36b of the sensor chip joining material 36 are arranged to overlap with one another when seen in the normal direction of the sensor chip 31. That is, the aperture edge 35a of the branch flow passage 35 and the aperture edge 36a of the sensor chip joining material 36 are arranged to overlap with one another when seen in the normal direction of the sensor chip 31.

The diaphragm 31a of the sensor chip 31 is formed at a part of the sensor chip 31 on an inner side of a part along the aperture edge 35a of the branch flow passage 35. The diaphragm 31a is opposed to the aperture plane 35b of the branch flow passage 35. In this embodiment, the aperture edge 35a of the branch flow passage 35 and the aperture edge 36a of the sensor chip joining material 36 are arranged to overlap with one another when seen in the normal direction of the sensor chip 31. Therefore, the diaphragm 31a is formed at a part on an inner side of a part along the aperture edge 36a of the sensor chip joining material 36. That is, the diaphragm 31a is formed within a range at an inner side surrounded by the inner circumferential edge 36a of the joint portion between the sensor chip 31 and the sensor enclosure 32.

The strain gauge part 31b which detects a strain is mounted at the center part of the surface of the sensor chip 31. Here, the branch flow passage 35 and the diaphragm 31a along therewith have a long direction and a short direction. The diaphragm 31a has the long direction and the short direction, and thereby, when the diaphragm 31a deforms by receiving a pressure from the system water 21, difference is caused between a magnitude of a strain of the strain gauge part 31b in the long direction and a magnitude of a strain of the strain gauge part 31b in the short direction. The strain gauge part 31b detects the strain in each of the long direction and the short direction, and outputs the difference. This is for offsetting a temperature characteristic of the strain gauge 31b.

The cap member 34 is joined to an upper side (an opposite side to the sensor enclosure 32) of the sensor chip 31. A joining means between the sensor chip 31 and the cap member 34 includes a thermosetting adhesive, a UV addition-type adhesive, low melting point glass, and the like. Below, description is made while an adhesive (adhesion member) which joins the sensor chip 31 and the cap member 34 is referred to as the cap member joining material. FIG. 4 illustrates the cap member joining material 37 in a state (shape) after the cap member joining material 37 applied to the vicinity of the diaphragm 31a is hardened, and the cap member joining material 37 corresponds to a joint portion (second joint portion) between the sensor chip 31 and the cap member 34.

Note that the cap member 34 may be installed to be pressed against the sensor chip 31 with an elastic body such as an 0 ring and a gasket without adhesive strength being interposed therebetween without using the cap member joining material 37. Alternatively, the cap member 34 may be installed to directly be pressed against sensor chip 31.

A recess part 34c dented from a lower surface 34u toward an upper surface 34t is provided to the opposed surface (lower surface) 34u of the cap member 34 to the sensor chip 31. That is, the cap member 34 has, at a center part of the lower surface 34u, the recess part 34c dented to the upper surface 34t side. The recess part 34c is provided so as to avoid contact with the sensor chip 31, and constitutes a non-contact part with the sensor chip 31. Therefore, the lower surface 34u of the cap member 34, the lower surface 34u being positioned on an outer circumferential side of the recess part 34c, is opposed to the sensor chip 31 with the cap member joining material 37 interposed therebetween. In this embodiment, the entire lower surface 34u of the cap member 34 is joined to the sensor chip 31. Therefore, the cap member joining material 37 is provided to the entire surface of the lower surface 34u positioned on the outer circumferential side of the recess part 34c, and the cap member joining material 37 and the lower surface 34u have the same shape.

As described above, the lower surface 34u of the cap member 34 is joined to the sensor chip 31 with the cap member joining material 37 interposed therebetween, and an opposed part of the sensor chip 31 opposed to the lower surface 34u serves as a placing surface (placing part) where the cap member 34 is placed. In this case, the pressure sensor 15 includes the second joint portion joining the cap member 34 and the sensor chip 31 by the adhesive (cap member joining material) 37. An inner circumference of the placing part where the cap member 34 is placed is defined by a position where an inner circumference of the second joint portion 37 contacts the sensor chip 31.

The recess part 34c forms an aperture plane 34b at the lower surface 34u of the cap member 34, and an outer edge (aperture edge) 34a of the aperture plane 34b is formed at the lower surface 34u of the cap member 34. The outer edge (aperture edge) 34a of the aperture plane 34b constitutes an inner circumference (inner circumferential edge) of the lower surface 34u.

The cap member joining material 37 which is the joint portion between the cap member 34 and the sensor chip 31 has an aperture plane 37b at a part opposed to the aperture plane 34b, and an outer edge (aperture edge) 37a of the aperture plane 37b is formed. The aperture edge 37a of the cap member joining material 37 constitutes an inner circumference (inner circumferential edge) of the cap member joining material 37.

In this embodiment, the aperture plane 34b of the recess part 34c and the aperture plane 37b of the cap member joining material 37 are arranged to overlap with one another when seen in the normal direction of the sensor chip 31. That is, the aperture edge 34a of the recess part 34c and the aperture edge 37a of the joining material 37 are arranged to overlap with one another when seen in the normal direction of the sensor chip 31.

The center part of the upper surface (the end surface on the opposite side to the sensor chip 31) 34t of the cap member 34 is applied with a pressing force received from the compression coil spring 60. This pressing force acts in a direction to compress the cap member joining material 37 and the sensor chip joining material 36. In this case, the sensor chip 31 receives the pressing force from the compression coil spring 60 at a part (range) opposed to the lower surface 34u of the cap member 34. Therefore, the inner circumference of the recess part 34c (the inner circumference of the lower surface 34u) defines an inner circumferential edge of the range where the pressing force from the compression coil spring 60 is applied to the sensor chip 31.

In FIG. 4, a flat plane perpendicular to the normal direction of the sensor chip 31 is assumed, and this flat plane is referred to as an imaginary flat plane. Moreover, in FIG. 4, this imaginary flat plane is assumed as a flat plane in parallel to and including an upper surface 31t of the sensor chip 31.

When the inner circumference 36a of the sensor chip joining material 36 is projected on the imaginary flat plane 31t in the normal direction, a projection line (inner-circumference projection line) of the inner circumference 36a is a broken line 50. When the inner circumference 37a of the cap member joining material 37 is projected on the imaginary flat plane 31t in the normal direction, a projection line (inner-circumference projection line) of the inner circumference 37a is a broken line 51. In this case, the inner-circumference projection line 51 matches the inner circumference (inner circumferential edge) of the placing part of the sensor chip 31, the placing part being the part where the cap member 34 is placed. The placing part receives the pressing force by the compression coil spring 60 (pressing member) with the cap member 34 interposed therebetween.

A feature of this embodiment is a configuration in which the inner-circumference projection line 51 of the cap member joining material 37 is positioned on an inner side of the inner-circumference projection line 50 of the sensor chip joining material 36. That is, the inner circumference 51 of the placing part of the sensor chip 31, the placing part being the part where the cap member 34 is placed, is disposed at a closer position to a center of the diaphragm portion 31a than the position where the inner circumference 36a of the joint portion 36 between the sensor enclosure 32 and the sensor chip 31 is disposed.

In detail, the pressure sensor 15 of this embodiment includes:
the sensor enclosure 32 in which the first flow passage 33 and the second flow passage 35 that branches from the first flow passage 33 are formed;
the sensor chip 31 including the diaphragm portion 31a provided in such a manner as to block the second flow passage 35, and is configured to be joined to the sensor enclosure 32;
the cap member 34 installed on the sensor chip 31 in such a manner as to cover the diaphragm portion 31a from the opposite side to the sensor enclosure 32; and
the pressing member 60 configured to press the cap member 34 toward the sensor chip 31, wherein
the inner circumference 51 of the placing part of the sensor chip 31 is disposed at the closer position to the center of the diaphragm portion 31a than the position at which the inner circumference of the joint portion 36 between the sensor enclosure 32 and the sensor chip 31 is disposed, the placing part being the part where the cap member 34 is placed.

In this case, the first joint portion 36, the sensor chip 31, and the second joint portion 37 are arranged in an order of the first joint portion 36, the sensor chip 31, and the second joint portion 37 from the sensor enclosure 32 side. Also, on the plane of projection in the normal direction of the sensor chip 31, the projection line 51 of the inner circumference 37a of the second joint portion 37 is disposed at the position closer to the center of the diaphragm portion 31a than the position of the projection line 50 of the inner circumference 36a of the first joint portion 36.

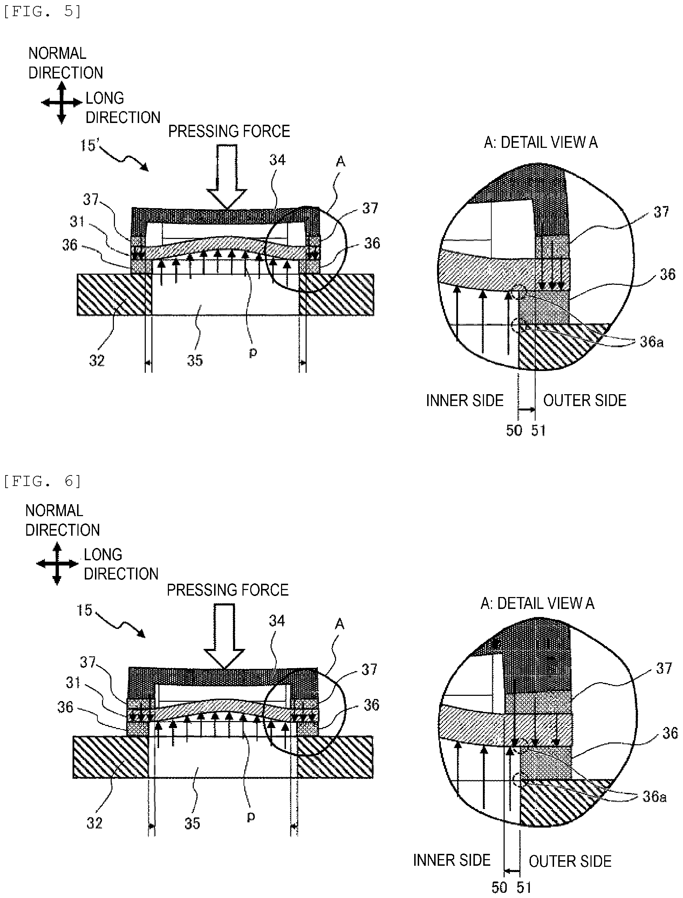

An effect of the configuration which is the feature of the invention is described with reference to FIGS. 5 and 6.

FIG. 5 is a sectional view of a pressure sensor which is a comparative example of the invention. FIG. 5 illustrates a pressure sensor 15' as a comparative example of the invention, where the inner-circumference projection line 51 of the cap member joining material 37 is positioned on the outer side of the inner-circumference projection line 50 of the sensor chip joining material 36. FIG. 5 illustrates the pressure sensor 15' in a state in which the sensor chip 31 deforms by receiving a pressure p from the system water 21. Note that a cross section in FIG. 5 is a cross section along the long direction and the normal direction of the sensor chip 31 and passing though the center of the cap member 34. Below, when simply being referred to as a sectional view, the cross section is, similarly to FIG. 5, a cross section along the long direction and the normal direction of the sensor chip 31 and passing though the center of the cap member 34.

The cap member 34 compresses the sensor chip joining material 36 in the normal direction by a pressing force of the compression coil spring 60 with the cap member joining material 37 and the sensor chip 31 interposed therebetween. However, since the inner-circumference projection line 51 of the cap member joining material 37 is positioned on the outer side of the inner-circumference projection line 50 of the sensor chip joining material 36, only a part on an outer side of the inner circumference (inner side end portion) 36a of the sensor chip joining material 36 is compressed.

In a case in which the sensor chip 31 deforms by receiving the pressure p from the system water in this state, a force in a direction to peel off the joint surface (joint portion) between the sensor enclosure 32 and the sensor chip 31 is generated at the inner circumference 36a of the sensor chip joining material 36. Therefore, peeling may be caused between the sensor enclosure 32 and the sensor chip 31 due to an excess pressure or a repeated pressure.

FIG. 6 is a sectional view of the pressure sensor 15 according to Embodiment 1. FIG. 6 illustrates the pressure sensor 15 according to the invention, where the inner-circumference projection line 51 of the cap member joining material 37 is positioned on the inner side of the inner-circumference projection line 50 of the sensor chip joining material 36. FIG. 6 illustrates the pressure sensor 15 in a state in which the sensor chip 31 deforms by receiving the pressure p from the system water 21.

Similarly to FIG. 5, the cap member 34 compresses the sensor chip joining material 36 in the normal direction by a pressing force of the compression coil spring 60 with the cap joining material 37 and the sensor chip 31 interposed therebetween. Here, since the inner-circumference projection line 51 of the cap member joining material 37 is positioned on the inner side of the inner-circumference projection line 50 of the sensor chip joining material 36, a range including the inner circumference (inner side end portion) 36a of the sensor chip joining material 36 is compressed.

Even when the sensor chip 31 deforms by receiving the pressure p from the system water in this state, when a compressing force of the sensor chip joining material 36 caused by the pressing of the compression coil spring 60 is larger than the load p, the compressed state is maintained at the inner circumference 36a of the sensor chip joining material 36. That is, a force in the direction to peel off the joint surface (joint portion) between the sensor enclosure 32 and the sensor chip 31 is not generated, and thereby peeling between the sensor enclosure 32 and the sensor chip 31 due to an excess pressure or a repeated pressure is not caused. Therefore, sensitivity decrease and liquid leakage attributed to the peeling between the sensor enclosure 32 and the sensor chip 31 can be prevented.

A necessary pressing force can be obtained through, for example, a stress analysis. Although the position where the pressing force is applied is not limited to the center part of the cap member 34 and may be defined to be an arbitrary position, pressing the center part of the cap member 34 as illustrated in FIG. 5 is desirable. This is because flexure of the cap member 34 increases the compressing force generated in the cap member joining material 37 at the inner side, and thus the inner circumference 36a of the sensor chip joining material 36 can effectively be compressed.

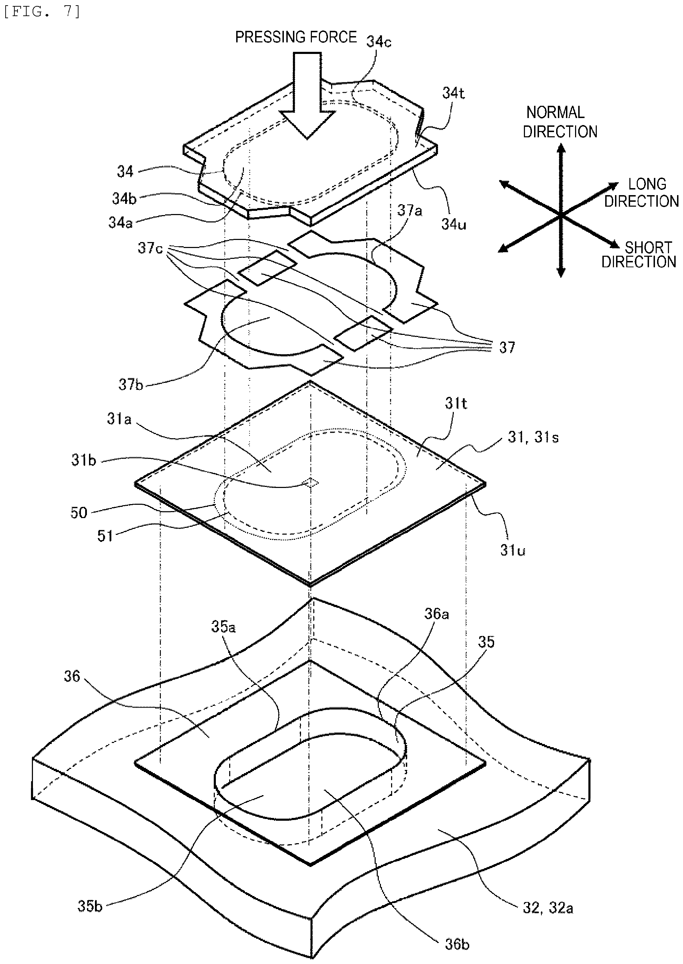

Next, a modification of Embodiment 1 is described with reference to FIG. 7. FIG. 7 is an exploded perspective view of the pressure sensor 15 in the vicinity of the sensor chip 31 according to the modification of Embodiment 1.

In this modification, the configuration of the cap member joining material 37 in Embodiment 1 is partially changed. Below, a part (different point) of the cap member joining material 37 in this modification different from the cap member joining material in Embodiment 1 is described. A configuration other than the different point described below is similar to that in Embodiment 1, and the reference character the same as in Embodiment 1 is given to the configuration in common with Embodiment 1, so that redundant description is omitted. Moreover, the configuration similar to that in Embodiment 1 achieves operation and effects similar to those in Embodiment 1.

The cap member joining material 37 includes multiple clearance gaps (separation portion) 37c. The separation portion 37c constitutes a dividing portion which divides the cap member joining material 37 into multiple parts. That is, the pressure sensor 15 of this embodiment includes, at the cap member joining material (second joint portion) 37, the dividing portion 37c which divides the second joint portion 37 into the multiple parts.

In this case, the inner-circumference projection line 51 of the cap member joining material 37 becomes a line disconnected at a part corresponding to the separation portion 37c. A compressing force is not generated immediately below the separation portion 37c whereas a compressing force is generated at the other portion, and thereby the effect of Embodiment 1 is similarly achieved.

In Embodiment 1 and the modification thereof, the example in which the compression coil spring 60 is used as the pressing means (pressing member) is described. However, the object is similarly achieved by using an elastic body such as a torsion coil spring, a flat spring, and a rubber, as the pressing means. Moreover, any number of pressing means may be used. Furthermore, as described above, the cap member 34 may be installed to be pressed against the sensor chip 31 directly, or with an elastic body such as an o ring and a gasket without adhesive strength being interposed therebetween. In this case, the joint portion (joint surface) by the cap member joining material 37 is interpreted as the placing surface (placing part) of the sensor chip 31 where the cap member 34 is placed, that is, a contact surface between the cap member 34 and the sensor chip 31. Also, by this placing surface (placing part) or the contact surface being configured similarly to the joint portion by the cap member joining material 37 in Embodiment 1 and the modification thereof, the object of the invention is achieved.

### [Embodiment 2]

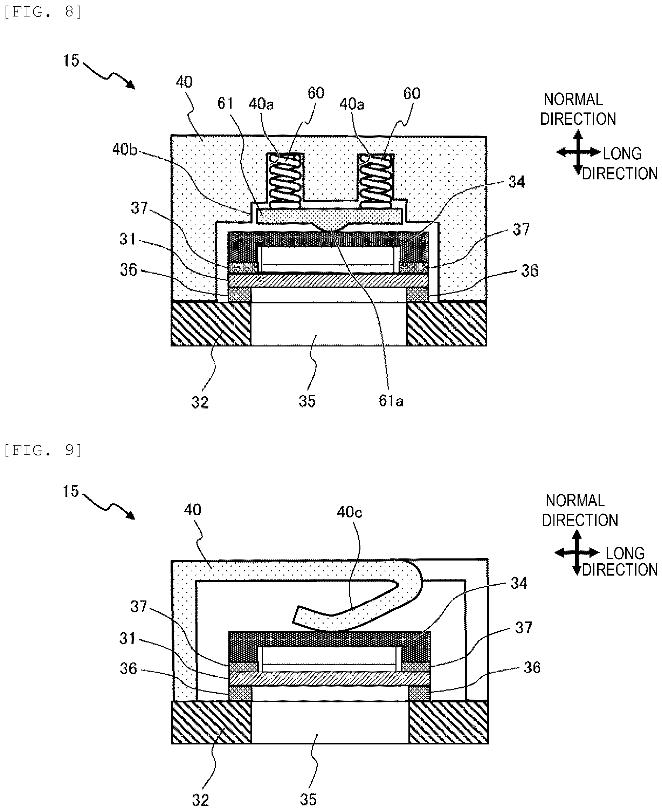

A second embodiment of the invention is described with reference to FIG. 8. FIG. 8 is a sectional view of the pressure sensor 15 according to the second embodiment (Embodiment 2) of the invention. FIG. 8 illustrates a cross section of a vicinity of the sensor chip 31. Below, a part different from Embodiment 1 (different point) is described. A configuration other than the different point described below is similar to that in Embodiment 1, and the reference character the same as in Embodiment 1 is given to the configuration in common with Embodiment 1, so that redundant description is omitted. Moreover, the configuration similar to that in Embodiment 1 achieves operation and effects similar to those in Embodiment 1.

In this embodiment, as the pressing means (pressing member) which presses the center part of the cap member 34, two compression coil springs 60 and an intermediate member 61 are used. That is, this embodiment is different from Embodiment 1 in that the two compression coil springs 60 and the intermediate member 61 are used.

In the pressure sensor 15 of this embodiment, the two compression coil springs 60 are installed between the cover 40 and the intermediate member 61 in a compressed state, and a protrusion portion 61a formed at the intermediate member 61 presses the center (center part) of the cap member 34. The protrusion portion 61a is provided to a lower surface (a surface opposed to the cap member 34) of the intermediate member 61 in such a manner as to protrude downwardly.

That is, the pressure sensor 15 of this embodiment includes the intermediate member 61 and the cover 40. The intermediate member 61 is disposed in contact with the pressing position of the cap member 34. The cover 40 is fixed to the sensor enclosure 32 and covers the sensor chip 31, the cap member 34, and the pressing member 60. The pressure sensor 15 uses, as the pressing member, the single or multiple compression coil springs (elastic bodies) 60 installed between the cover 40 and the intermediate member 61 in a state compressed compared to the natural length.

A guide hole 40b is formed in the cover 40 of this embodiment, and the intermediate member 61 is disposed inside the guide hole 40b formed in the cover 40. This is for the sake of preventing the intermediate member 61 from leaning at the time of compression and extension of the compression coil spring 60, and having improved assemblability. By this configuration, the center part of the cap member 34 can be pressed also in the case in which the multiple compression coil springs 60 are used, resulting in easing of restriction in designing, such as selection of a spring becoming easier.

Note that an elastic body such as a torsion coil spring, a flat spring, and a rubber, may be used as an alternative to the compression coil spring 60. Moreover, any number of elastic bodies (springs) may be used. Furthermore, instead of the protrusion portion 61a being provided to the intermediate member 61, a protrusion portion which protrudes upwardly may be provided to the upper surface of the cap member 34.

### [Embodiment 3]

A third embodiment of the invention is described with reference to FIG. 9.

FIG. 9 is a sectional view of a pressure sensor according to a third embodiment (Embodiment 3) of the invention. FIG. 9 illustrates a cross section of a vicinity of the sensor chip 31. Below, a part different from Embodiment 1 (different point) is described. A configuration other than the different point described below is similar to that in Embodiment 1, and the reference character the same as in Embodiment 1 is given to the configuration in common with Embodiment 1, so that redundant description is omitted. Moreover, the configuration similar to that in Embodiment 1 achieves operation and effects similar to those in Embodiment 1.

In this embodiment, as the pressing means (pressing member) which presses the center part of the cap member 34, a flat spring 40c formed by a part of the cover 40 being bent is used. That is, this embodiment is different from Embodiment 1 and Embodiment 2 in that the compression coil spring 60 is replaced by the flat spring 40c formed in the cover 40.

In the pressure sensor 15 of this embodiment, the flat spring 40c is installed in a compressed state, and presses the center part of the cap member 34.

That is, the pressure sensor 15 according to this embodiment includes the cover 40 which is fixed to the sensor enclosure 32 and covers the sensor chip 31 and the cap member 34. The pressure sensor 15 uses, as the pressing member, the flat spring (spring portion) 40c formed integrally with the cover 40.

As described above, as the pressing means, by the flat spring 40c integrated with the cover 40 being used as the pressing means, reduction in the number of components and simplification in assemblability become possible. Therefore, a pressure sensor at a low price and having favorable assemblability can be provided.

Note that the shape of the flat spring 40c is not limited to the structure illustrated in FIG. 9, but variety of shapes may be considered. Moreover, also in a structure in which a rubber is used as the material of the cover 40 and a part thereof is compressed, the object is achieved similarly to the compression coil spring 60 and the flat spring 40c.

Moreover, as the cap member joining material 37 of this embodiment, the cap member joining material 37 in the modification of Embodiment 1 may be used.

### [Embodiment 4]

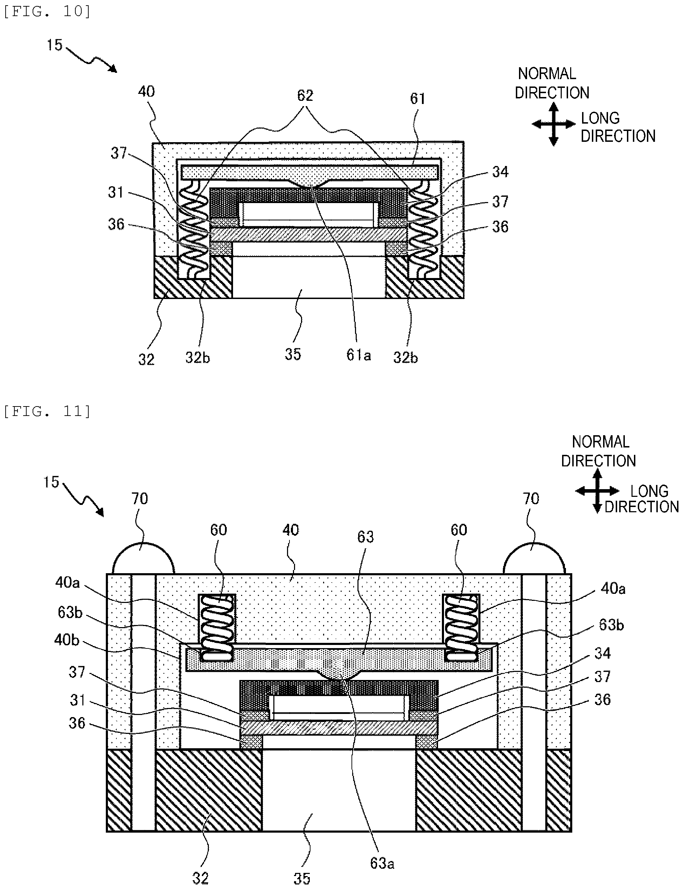

A fourth embodiment of the invention is described with reference to FIG. 10. FIG. 10 is a sectional view of a pressure sensor according to a fourth embodiment (Embodiment 4) of the invention. FIG. 10 illustrates a cross section of a vicinity of the sensor chip 31. Below, a part different from Embodiment 1 (different point) is described. A configuration other than the different point described below is similar to that in Embodiment 1, and the reference character the same as in Embodiment 1 is given to the configuration in common with Embodiment 1, so that redundant description is omitted. Moreover, the configuration similar to that in Embodiment 1 achieves operation and effects similar to those in Embodiment 1.

This embodiment is different from Embodiment 1 in that, as the pressing means (pressing member) which presses the center part of the cap member 34, two tensile coil springs 62 and the intermediate member 61 are used. In other words, this embodiment has a structure in which the two compression coil springs 60 in Embodiment 2 are replaced by the two tensile coil springs 62.

That is, the pressure sensor according to this embodiment includes the intermediate member 61 disposed in contact with the pressing position of the cap member 34. The pressure sensor 15 uses, as the pressing member, the single or multiple tensile coil springs (elastic bodies) 62 installed between the sensor enclosure 32 and the intermediate member 61 in the state extended compared to the natural length.

In the pressure sensor 15 of this embodiment, the two tensile coil springs 62 are installed between a spring holding portion 32b formed in the sensor enclosure 32 and the intermediate member 61 in an extended state, and the protrusion portion 61a formed at the intermediate member 61 presses the center of the cap member 34. The spring holding portion 32b is formed to be excavated from the surface of the sensor enclosure 32. This brings an effect of having large room for extension of the tensile coil spring 62.

In this embodiment, by the configuration described above, a spring does not need to be disposed at the upper part of the intermediate member 61. Therefore, arrangement efficiency of components is improved, and a pressure sensor decreased in size and thickness can be provided. Note that an elastic body such as a torsion coil spring, a flat spring, and a rubber, may be used as an alternative to the tensile coil spring 62. Moreover, any number of elastic bodies (springs) may be used. Furthermore, instead of the protrusion portion being provided to the intermediate member 61, a protrusion portion may be provided to the cap member 34.

Moreover, as the cap member joining material 37 of this embodiment, the cap member joining material 37 in the modification of Embodiment 1 may be used.

### [Embodiment 5]

A fifth embodiment of the invention is described with reference to FIG. 11. FIG. 11 is a sectional view of the pressure sensor 15 according to the fifth embodiment (Embodiment 5) of the invention. FIG. 11 illustrates a cross section of a vicinity of the sensor chip 31. Below, a part different from Embodiment 2 (different point) is described. A configuration other than the different point described below is similar to that in Embodiment 2, and the reference character the same as in Embodiment 2 is given to the configuration in common with Embodiment 2, so that redundant description is omitted. Moreover, the configuration similar to that in Embodiment 2 achieves operation and effects similar to those in Embodiment 2.

In this embodiment, as the pressing means (pressing member) which presses the center part of the cap member 34, the two compression coil springs 60 and an intermediate member 63 are used. A length of the intermediate member 63 in the long direction is longer than the length of the sensor chip 31 in the long direction. Moreover, the intermediate member 63 has, to be opposed to the guide hole 40a which guides one end of each of two compression coil springs 60, a guide hole 63b which guides the other end of the compression coil spring. That is, this embodiment is different from Embodiment 2 in that the intermediate member 63 is used.

In the pressure sensor 15 of this embodiment, the two compression coil springs 60 are installed between the cover 40 and the intermediate member 63 in a compressed state, and a protrusion portion 63a formed at the intermediate member 63 presses the center (center part) of the cap member 34. The protrusion portion 63a is provided to a lower surface (a surface opposed to the cap member 34) of the intermediate member 63 in such a manner as to protrude downwardly.

This embodiment shows that, as a means to install the two compression coil springs 60 between the cover 40 and the intermediate member 63 in the compressed state, a screw 70 is used to couple the cover 40 and the sensor enclosure 32. Note that the means to install the coil springs 60 in the compressed state is not limited to the foregoing configuration, but another member may be used to adhere at the contact end surface between the cover 40 and the sensor enclosure 32, or make the cover 40 and the sensor enclosure 32 contact one another.

In this embodiment, the intermediate member 63 has the length longer than the length of the sensor chip 31 in the long direction. Therefore, the two compression coil springs can be disposed even in the sensor chip 31 reduced in size, which makes selection of a spring and designing of arrangement easier.

In this embodiment, the intermediate member 63 has the guide hole 63b. Therefore, the compression coil spring 60 can be positioned on an upper surface of the intermediate member 63, which can suppress occurrence of leaning of the spring. Furthermore, since misaligning of the cover 40 and the intermediate member 63 can be suppressed, the protrusion portion 63a can press the center part of the cap member 34.

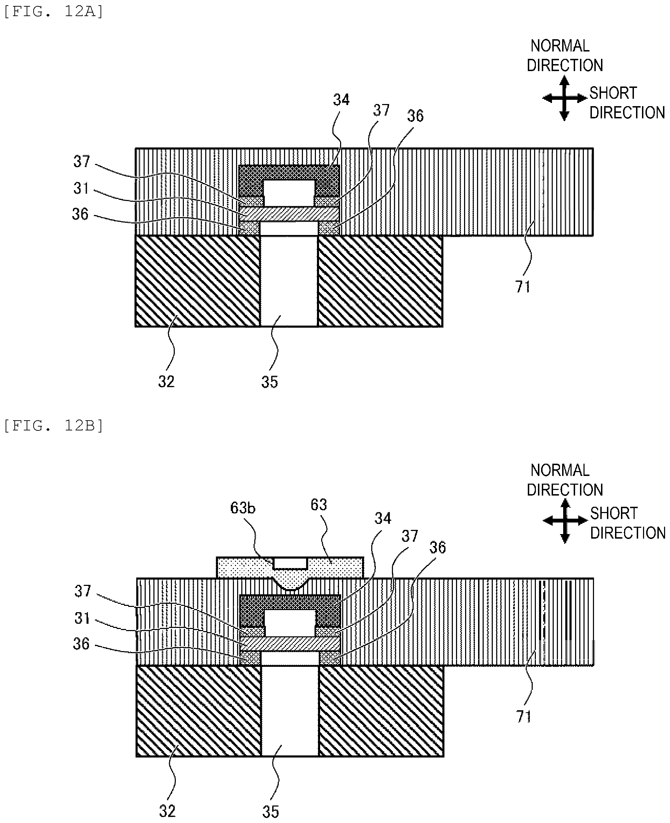

An assembling procedure (assembling method) of the fifth embodiment of the invention is described with reference to FIGS. 12A to 12G. FIGS. 12A to 12G are sectional views taken in the short direction for explaining an assembling procedure of the pressing means (pressing member).

The sensor chip joining material 36 adheres the sensor chip 31 to the sensor enclosure 32 in such a manner that the sensor chip 31 blocks the terminal of the branch flow passage 35 installed in the sensor enclosure 32. The cap member joining material 37 adheres the cap member 40 which protects the sensor chip 31 to the sensor chip 31 on the upper surface of the sensor chip 31 (this state is referred to as a sensor-chip-joined enclosure).

An assembly member 71 is made in contact with the upper surface of the sensor enclosure 32 of the sensor-chip-joined enclosure so as to assemble the pressing means (pressing member) (FIG. 12A). The assembly member 71 has, as will be described later, multiple notch portions in the long direction so as to assemble various members. For example, in FIG. 12A, a notch is provided in the long direction in such a manner as not to interfere with the chip sensor 31.

Next, the intermediate member 63 is disposed on an upper surface of the assembly member 71 to be positioned at a substantially center part of the cap member 34 (FIG. 12B). A lower end of the protrusion portion of the intermediate member 63 is positioned lower than the upper surface of the assembly member 71 since the lower end of the protrusion portion is at the notch portion. Moreover, a thickness of the assembly member 71 is adjusted so that the cap member 34 and the protrusion portion of the intermediate member 63 do not contact one another and have a gap therebetween.

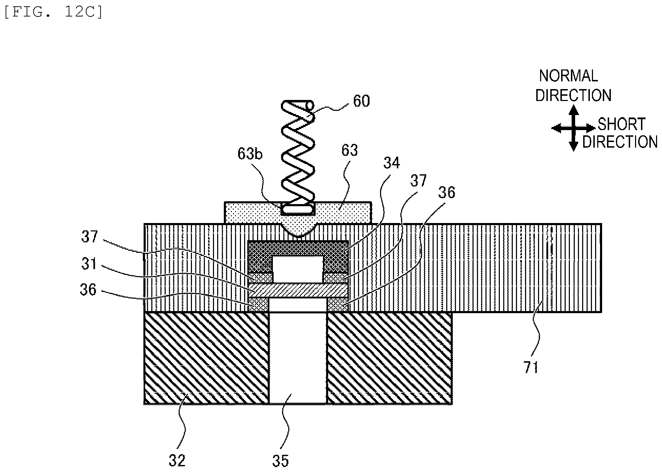

Next, the compression coil spring 60 is disposed at the guide hole 63b of the intermediate member 63 (FIG. 12C).

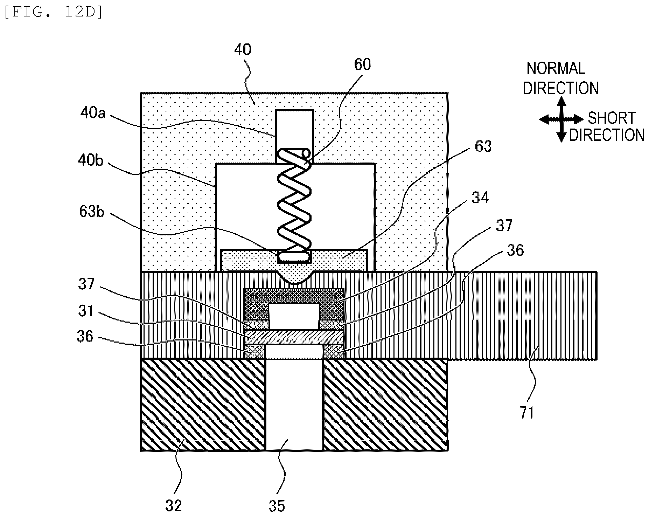

Next, the cover 40 is disposed in such a manner that the compression coil spring 60 fits into the guide hole 40a provided to the cover 40, and that the intermediate member 63 fits into the guide hole 40b (FIG. 12D).

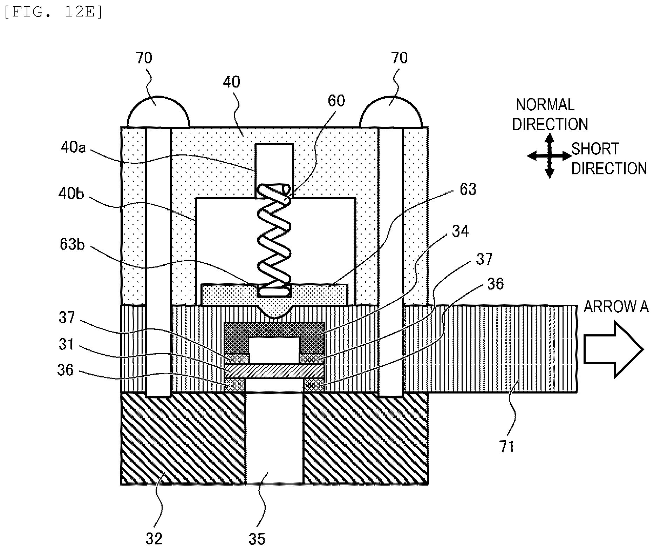

Next, the screw 70 is put through a screw-through hole (not illustrated) of the cover 40, and is temporarily fixed to a threaded hole (not illustrated) of the sensor enclosure 32 (FIG. 12E). In this state, the protrusion portion of the intermediate member 63 is disposed at the substantial center of the cover 40. Furthermore, the assembly member 71 is pulled out in a direction indicated by an arrow A. At this time, the assembly member 71 can easily be pulled out since the compression coil spring 60 is not compressed. Moreover, the intermediate member 63 is disposed inside the guide hole 40b of the cover 40.

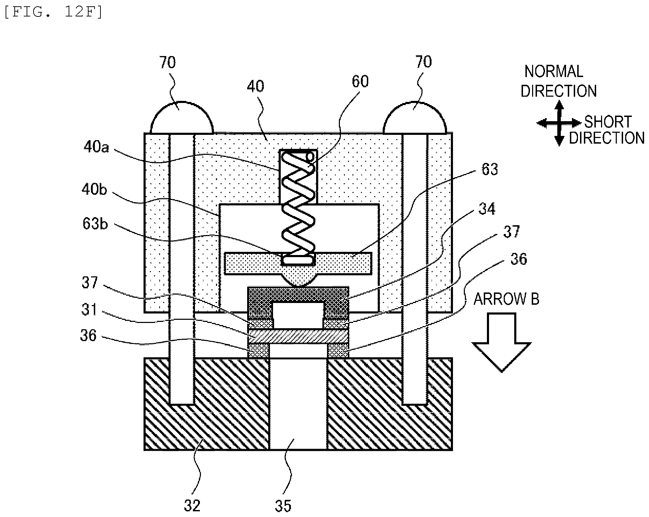

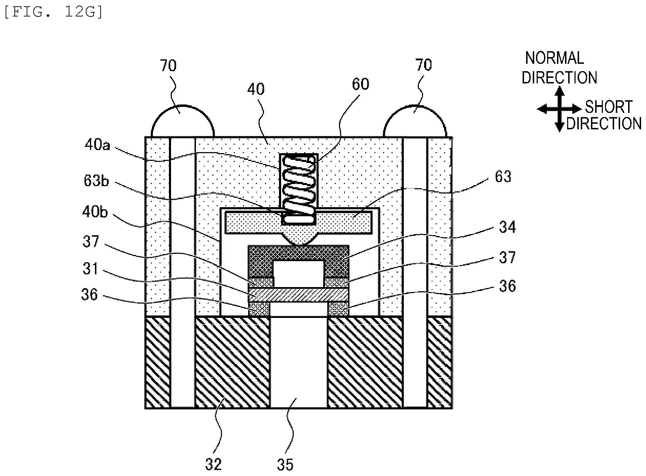

Next, by the assembly member 71 being removed, the protrusion portion of the intermediate member 63 contacts the cap member 34. Also by the screw 70 being screwed in, the compression coil spring becomes a compressed state and presses the cap member 34 (FIG. 12F). By the screw 70 being further screwed in, the lower end of the cover 40 and the upper surface of the sensor enclosure 32 are made in contact with one another, thus giving a desired pressing force (FIG. 12G) .

Another example of the assembling procedure of the fifth embodiment of the invention is described below.

In a case in which the intermediate member 63, the compression coil spring 60, and the cover 40 are made of magnetic material, the intermediate member 63, the compression coil spring 60, and the cover 40 are stacked in advance in order from a lower side. When a magnet is contacted with the upper surface of the cover 40, a magnetic force causes the intermediate member 63, the compression coil spring 60, and the cover 40 to adhere to and integrate with one another (this state is referred to as an integrated pressing means). The integrated pressing means is disposed immediately above the sensor-chip-joined enclosure, and a screw (for example, made of resin, ceramics, and nonmagnetic stainless steel) is disposed at the cover 40 to be temporarily fixed to the sensor-chip-joined enclosure. Then, the magnet is removed from the upper surface of the cover 40, and the screw is final-fastened.

The above-described assembling procedure of the fifth embodiment of the invention requires to only stack the respective members in order. During the process of the stacking of the respective members in order, the protrusion portion of the intermediate member 63 can be disposed at the center of the cap member 34. Moreover, a risk of damaging the pressing means (pressing member) due to erroneous contact with the cap member 34 during assembling can be reduced. Furthermore, when the intermediate member 63 is disposed, a risk of cutting the bonding wire 46 which connects the sensor chip 31 and the printed circuit board 45 due to contact of the intermediate member 63 with the bonding wire 46 can be reduced.

Note that although the assembling procedure of the compression coil spring 60 is different, the other procedure in the assembling procedure (assembling method) of the fifth embodiment is applicable also to the pressure sensor 15 of the fourth embodiment.

Note that the invention is not limited to the above-described embodiments, but includes various modifications. For example, the embodiments provide the detailed description so as to explain the invention to be easily understandable, and the invention is not limited to include all the described configurations. Moreover, the configuration of one embodiment may partially be replaced by the configuration of an other embodiment, and the configuration of one embodiment may be added to the configuration of an other embodiment. Furthermore, in terms of a partial configuration of each embodiment, addition of another configuration, deletion, and replacement are possible.

### Reference Signs List

1: dispensing device
2: nozzle
4: syringe pump
5: electromagnetic valve
6: gear pump
7: tank
8: pipe
15: pressure sensor
31: sensor chip
31a: diaphragm portion
32: sensor enclosure
33: flow passage (first flow passage)
34: cap member
35: branch flow passage (second flow passage)
36: sensor chip joining material (first joint portion)
37: cap member joining material (second joint portion)
40: cover
40c: flat spring (spring portion, pressing member)
50: inner-circumference projection line of sensor chip joining material (first joint portion) 36
51: inner-circumference projection line of cap member joining material 37 (inner circumference of placing part of sensor chip 31 where cap member 34 is placed)
60: compression coil spring (pressing member)
61: intermediate member
62: tensile coil spring (elastic body, pressing member)
63: intermediate member
70: screw
71: assembly member

## Claims

1. A pressure sensor comprising:
a sensor enclosure in which a first flow passage and a second flow passage that branches from the first flow passage are formed;
a sensor chip including a diaphragm portion provided in such a manner as to block the second flow passage, and configured to be joined to the sensor enclosure;
a cap member installed on the sensor chip in such a manner as to cover the diaphragm portion from an opposite side to the sensor enclosure; and
a pressing member configured to press the cap member toward the sensor chip, wherein
an inner circumference of a placing part of the sensor chip is disposed at a closer position to a center of the diaphragm portion than a position at which an inner circumference of a joint portion between the sensor enclosure and the sensor chip is disposed, the placing part being a part where the cap member is placed.

2. The pressure sensor according to Claim 1, wherein the sensor chip includes a thin film semiconductor, and
the joint portion constitutes a first joint portion joining the sensor enclosure and the sensor chip by an adhesive.

3. The pressure sensor according to Claim 2, further comprising a second joint portion joining the cap member and the sensor chip by an adhesive, wherein
the inner circumference of the placing part is defined by a position at which an inner circumference of the second joint portion contacts the sensor chip.

4. The pressure sensor according to Claim 3, wherein the second joint portion includes a dividing portion configured to divide the second joint portion into a plurality of parts.

5. The pressure sensor according to Claim 3, wherein the first joint portion, the sensor chip, and the second joint portion are arranged in an order of the first joint portion, the sensor chip, and the second joint portion from the sensor enclosure side, and
on a plane of projection in a normal direction of the sensor chip, a projection line of the inner circumference of the second joint portion is disposed at a closer position to the center of the diaphragm portion than a position of a projection line of the inner circumference of the first joint portion.

6. The pressure sensor according to Claim 1, wherein an application point of a pressing force of the pressing member is a center part of the cap member.

7. The pressure sensor according to Claim 1, further comprising a cover configured to be fixed to the sensor enclosure and cover the sensor chip, the cap member, and the pressing member, wherein
the pressure sensor uses, as the pressing member, a single or plurality of elastic bodies installed between the cover and the cap member in a state compressed compared to a natural length.

8. The pressure sensor according to Claim 1, further comprising:
an intermediate member disposed in contact with a pressing position of the cap member; and
a cover configured to be fixed to the sensor enclosure and cover the sensor chip, the cap member, and the pressing member, wherein
the pressure sensor uses, as the pressing member, a single or plurality of elastic bodies installed between the cover and the intermediate member in a state compressed compared to a natural length.

9. The pressure sensor according to Claim 1, further comprising an intermediate member disposed in contact with a pressing position of the cap member, wherein
the pressure sensor uses, as the pressing member, a single or plurality of elastic bodies installed between the sensor enclosure and the intermediate member in a state extended compared to a natural length.

10. The pressure sensor according to Claim 1, further comprising a cover configured to be fixed to the sensor enclosure and cover the sensor chip and the cap member, wherein
the pressure sensor uses, as the pressing member, a spring portion formed integrally with the cover.

11. The pressure sensor according to Claim 1, further comprising:
an intermediate member disposed in contact with a pressing position of the cap member; and
a cover configured to be fixed to the sensor enclosure and cover the sensor chip, the cap member, and the pressing member, wherein
the pressure sensor uses, as the pressing member, a single or plurality of elastic bodies installed between the cover and the intermediate member in a state compressed compared to a natural length, and
the intermediate member includes a guide hole configured to guide one end of the elastic body.

12. A method of assembling a pressure sensor, the pressure sensor including:
a sensor enclosure in which a first flow passage and a second flow passage that branches from the first flow passage are formed;
a sensor chip including a diaphragm portion provided in such a manner as to block the second flow passage, and configured to be joined to the sensor enclosure;
a cap member installed on the sensor chip in such a manner as to cover the diaphragm portion from an opposite side to the sensor enclosure;
an intermediate member disposed in contact with a pressing position of the cap member;
a single or plurality of pressing members configured to press the cap member toward the sensor chip; and
a cover configured to be fixed to the sensor enclosure and cover the sensor chip, the cap member, and the pressing member, wherein
an inner circumference of a placing part of the sensor chip is disposed at a closer position to a center of the diaphragm portion than a position at which an inner circumference of a joint portion between the sensor enclosure and the sensor chip is disposed, the placing part being a part where the cap member is placed,
the assembling method being **characterized by** stacking the intermediate member, the pressing member, and the cover in order.

13. The method of assembling the pressure sensor according to Claim 12, wherein an assembly member is provided, the assembly member supporting the intermediate member, the pressing member, and the cover in a stacked state, and having a thickness adjusted so that the cap member and the pressing member do not contact one another,
the assembling method comprising temporarily disposing the intermediate member, the pressing member, and the cover, and then removing the assembly member to position the cap member and the pressing member in contact with one another.

14. A dispensing device including a nozzle, a syringe pump, an electromagnetic valve, a gear pump, and a system water tank,
the dispensing device comprising the pressure sensor according to Claim 1 at a pipe configured to connect the nozzle, the syringe pump, the electromagnetic valve, the gear pump, and the system water tank.
